(19) Europäisches Patentamt / European Patent Office / Office européen des brevets

(11) **EP 4 242 759 A1**

(12) **EUROPEAN PATENT APPLICATION**

(43) Date of publication:
**13.09.2023 Bulletin 2023/37**

(21) Application number: **23159951.5**

(22) Date of filing: **03.03.2023**

(51) International Patent Classification (IPC):
**G05B 19/406** (2006.01)   **B23Q 11/12** (2006.01)
**G05B 19/404** (2006.01)

(52) Cooperative Patent Classification (CPC):
**G05B 19/404; B23Q 1/70; B23Q 11/127;**
**B23Q 17/0985; G05B 19/406;** G05B 2219/37429;
G05B 2219/49052

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.03.2022 IT 202200004217**

(71) Applicant: **SCM Group S.p.A.**
**47921 Rimini (RN) (IT)**

(72) Inventor: **CAPUCCI, Alberto**
**47921 Rimini (RN) (IT)**

(74) Representative: **Tiburzi, Andrea et al**
**Barzanò & Zanardo Roma S.p.A.**
**Via Piemonte 26**
**00187 Roma (IT)**

(54) **IMPROVED ELECTROSPINDLE**

(57)   The present invention relates to an improved electrospindle comprising a casing (11), a shaft (3), an electric motor (2) for rotating said shaft (3), a first temperature detection device (4) for detecting in at least one instant of time $t_i$ a respective temperature value $T_{Mi}$ associated with said electric motor (2), at least one first ventilation device (F) for emitting an air jet inside a portion of said casing (11) arranged around said electric motor (2), wherein said first ventilation device (F) comprises at least one blade (B) and a motor (E) for rotating said blade (B). Said electrospindle comprises storage means (6) wherein a first temperature threshold is stored $T_{S1}$ associated with said electric motor (2) and at least a first velocity value associated with the motor (E) of said first ventilation device (F), and a control unit (U) configured to acquire each temperature value $T_{Mi}$, compare each temperature value $T_{Mi}$ with said first temperature threshold $T_{S1}$, and sending a control signal to said motor (E) of said first ventilation device (F), so that the velocity value of said motor (E) is equal to said first velocity value, when a temperature value $T_{Mi}$ is greater than said first temperature threshold $T_{S1}$.

Fig. 1

EP 4 242 759 A1

## Description

The present invention relates to an improved electrospindle.

## Field of invention

In particular, the present invention relates to an electrospindle designed to adjust the velocity of a fan of at least one ventilation device (included in said electrospindle) in order to cool the electric motor of said electrospindle.

## Prior art

As is known, a machine tool comprises a machining head provided with one or more electrospindles.

An electrospindle comprises a shaft having a longitudinal axis and an electric motor for rotating said shaft about said longitudinal axis.

In particular, the electric motor comprises a stator and a rotor and said shaft is arranged inside said rotor and integral with said rotor.

Furthermore, an electrospindle has a first end portion, on which a respective tool can be positioned and a second end portion, opposite to said first end portion.

For machining a workpiece, the first end portion can be coupled directly to the tool or provided with a support/tool holder that can be coupled with the tool.

The tool is chosen based on the machining to be performed. For example, if a hole needs to be drilled, the tool can be a drill bit.

When an electrospindle is in use, the electric motor causes the rotation of the shaft, and the rotation of the shaft causes rotation of the tool.

The temperature of the electric motor rises as a workpiece is being machined.

In particular, the temperature increases significantly when the workpiece is made of a hard material, such as marble, glass, stone, etc.

Consequently, the electric motor of the electrospindle should be cooled.

To this end, the electrospindle can be provided with a ventilation device to emit an air jet.

A first example of a known type of electrospindle comprises a single ventilation device comprising at least one blade and a motor for rotating said blade.

The air jet emitted by this ventilation device must dissipate a quantity of heat produced by the electric motor of the electrospindle, so that the temperature of the electric motor is compatible with the temperature of the materials of which the electrospindle is made of, and in particular with the temperature referred to the insulating materials present inside the stator, as well as with the temperature of the bearings that support the rotor.

A disadvantage is given by the fact that it is not possible to adjust the velocity of the motor and consequently of the blade based on the temperature of the electric motor of the electrospindle.

Accordingly, a further disadvantage is that the ventilation device generates a high noise level while in use.

In fact, currently, when the electric motor of the electrospindle needs to be cooled, the number of revolutions of the motor of the ventilation device is equal to the maximum number of revolutions available, i.e. the maximum number of revolutions associated with the motor of said ventilation device.

## Aim of the invention

The aim of the present invention is to overcome said disadvantages, providing an improved electrospindle comprising a casing and at least one ventilation device provided with one or more blades and a motor for rotating said one or more blades, in which said electrospindle is designed to adjust the velocity of said motor and, therefore, the velocity of said one or more blades, in order to cool the electric motor of said electrospindle according to the temperature detected on said electrospindle.

A second aim of the invention is to provide an improved electrospindle for cooling the electric motor, with a reduced noise level compared to the noise level of a known type of electrospindle.

A third aim of the invention is to provide an improved electrospindle, in which said at least one ventilation device emits an air jet inside the casing, towards a portion of said casing arranged around the electric motor of the electrospindle.

In particular, since the electric motor of the electrospindle comprises a stator and a rotor, and the rotation of said electric motor (i.e., the rotation of the rotor) causes the rotation of a shaft around its longitudinal axis, arranged at least partially inside the rotor, the direction of said air jet is parallel to the longitudinal axis of said shaft.

Further aim of the invention is to provide a reliable electrospindle having a simple structure and a low production cost.

## Object of the invention

It is therefore a specific object of the present invention an electrospindle comprising:

- a casing comprising a first end wall and a second end wall, opposite to said first end wall,
- a shaft having a longitudinal axis, arranged at least partially inside said casing,
- an electric motor for rotating said shaft around said longitudinal axis, wherein said electric motor is arranged inside said casing,
- a first temperature detecting device for detecting in at least one time instant $t_i$ with i=1 ...N, where N is a positive integer, a respective temperature value $T_{Mi}$ associated with said electric motor,

- at least one first ventilation device for emitting an air jet, wherein said first ventilation device is arranged on said end wall in such a way that, when in use, said air jet is directed inside a portion of said casing arranged around said electric motor, said first ventilation device comprising at least one blade and a motor for rotating said blade,
- storage means wherein a first temperature threshold $T_{S1}$ associated with said electric motor and at least one first velocity value associated with the motor of said first ventilation device are stored,
- a control unit, connected to said first temperature detecting device, to said motor of said first ventilation device and to said storage means, and configured to:

  ○ acquire each temperature value $T_{Mi}$ associated with said electric motor of said electrospindle through said first temperature detecting device,
  ○ compare each temperature value $T_{Mi}$ associated with said electric motor of said electrospindle with said first temperature threshold $T_{S1}$ stored in said storage means,
  ○ if a temperature value $T_{Mi}$ associated with said electric motor of said electrospindle is greater than said first temperature threshold $T_{S1}$, send a control signal to said motor of said first ventilation device so that the value of velocity of said motor of said first ventilation device is equal to said first velocity value stored in said storage means.

Preferred embodiments are defined in the dependent claims.

## List of the attached Figures

The present invention will be now described, for illustrative but not limitative purposes, according to its preferred embodiments, with particular reference to the Figures of the enclosed drawings, wherein:

Figure 1 is a perspective view of a first embodiment of an electrospindle according to the present invention;
Figure 2 is a first rear view of the electrospindle of Figure 1 to show a ventilation device, included in said electrospindle, and a protection device for protecting said ventilation device;
Figure 3 is a second rear view of the electrospindle of Figure 1, similar to figure 1, to show said ventilation device, in which said protection device has been removed;

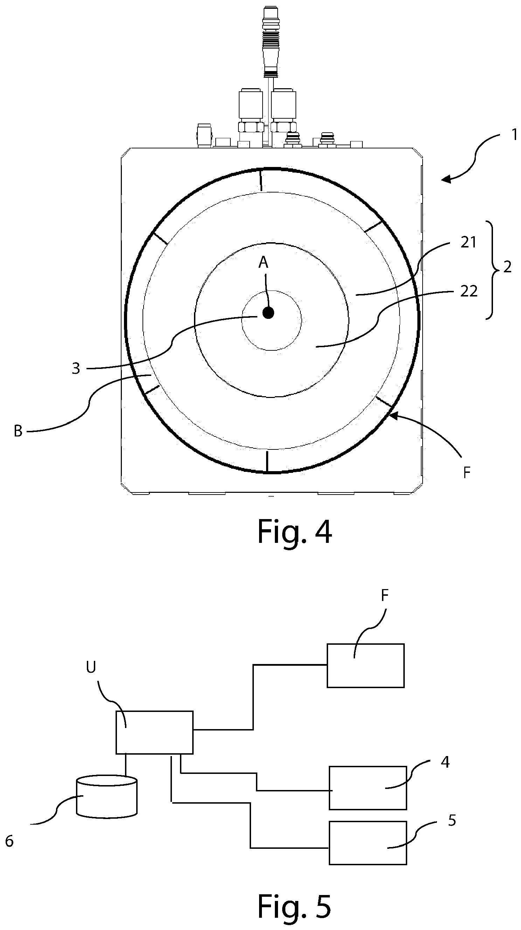

Figure 4 is a cross-sectional view of the electrospindle of Figure 1 to show the electric motor comprising a stator and a rotor, as well as a shaft arranged inside the rotor and integral with said rotor;
Figure 5 is a circuit diagram to show a control unit included in the electrospindle of Figure 1, in which said control unit is connected to storage means, to a ventilation device, to a first sensing device for detecting the temperature of the electric motor of the electrospindle and a second detection device for detecting the temperature of a bearing included in said electrospindle;
Figure 6 is a perspective view of a second embodiment of the electrospindle according to the invention;
Figure 7 is a first rear view of the electrospindle of Figure 6 to show a plurality of ventilation devices, included in said electrospindle, and a respective protection device for protecting each ventilation device;
Figure 8 is a second rear view of the electrospindle of Figure 7, similar to Figure 7, to show each ventilation device, in which the respective protection device has been removed;
Figure 9 is a circuit diagram for showing a control unit included in the electrospindle of Figure 6, in which said control unit is connected to storage means, to a plurality of ventilation devices, to a first detecting device for detecting the temperature of the electric motor of the electrospindle, and to a second sensing device for detecting the temperature of a bearing included in said electrospindle.

In the various Figures, similar parts will be indicated with the same reference numbers.

## Detailed description of the invention

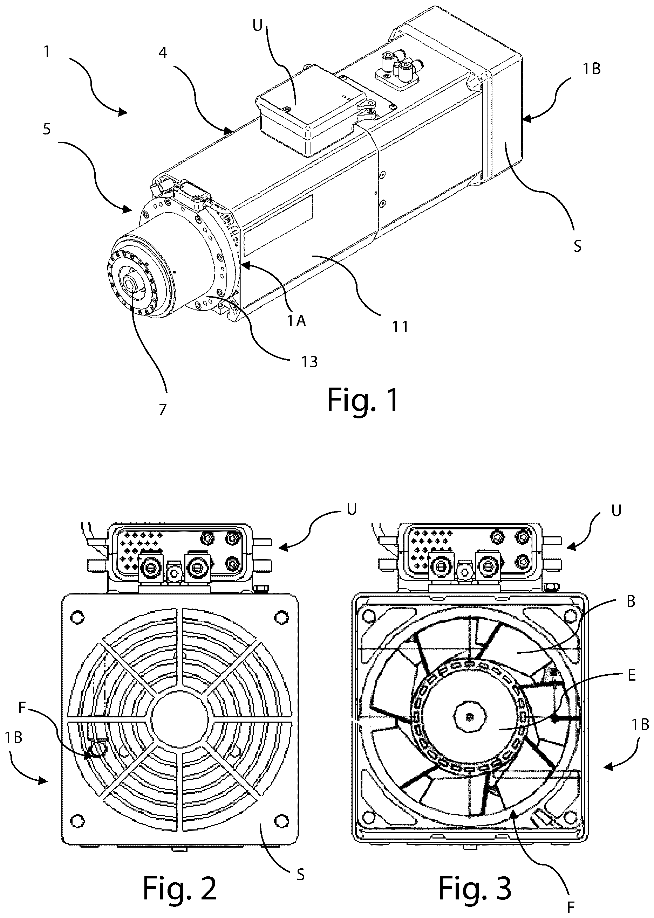

With reference to Figure 1, an improved electrospindle is described.
Said electrospindle includes:

- a casing 11 comprising a first end wall 1A and a second end wall 1B, opposite said first end wall 1A,
- a shaft 3 having a longitudinal axis A, arranged at least partially inside said casing 11,
- an electric motor 2 for rotating said shaft 3 around said longitudinal axis A, arranged inside said casing 11,
- a first temperature detecting device 4, for sensing in at least one time instant $t_i$ with i=1...N, where N is a positive integer, a respective temperature value $T_{Mi}$ associated with said electric motor 2,
- a first ventilation device F for emitting an air jet, wherein the first said ventilation device F is arranged on said second end wall 1B, in such a way that, when in use, said air jet is directed towards the inside a portion of said casing 1, arranged around said electric motor 2, wherein said first ventilation device F comprises at least one blade B, and a motor E for rotating said blade B,
- storage means 6, wherein a first temperature threshold $T_{S1}$ associated with said electric motor 2, and at least one first velocity value associated with the motor E of the first ventilation device F are stored.

Said electrospindle also comprises:

- a control unit U, connected to said first temperature detecting device 4, to said motor E of said first ventilation device F and to said storage means 6, and configured to:

  ○ acquire each temperature value $T_{Mi}$ associated with said electric motor 2 through said first temperature detecting device 4,
  ○ compare each temperature value $T_{Mi}$ associated with said electric motor 2 of said electrospindle with said first temperature threshold $T_{S1}$ stored in said storage means 6,
  ○ if a temperature value $T_{Mi}$ associated with said electric motor 2 is greater than said first temperature threshold $T_{S1}$, send a control signal to said motor E of said first ventilation device, so that the velocity value of motor E of said first ventilation device F is equal to said first velocity value stored in said storage means 6.

Said first velocity value associated with said motor of said motor E of said first ventilation device F and stored in said storage means 6 is a predetermined velocity value $V_{REF}$.

Said predetermined velocity value $V_{REF}$ it is a fixed value.

Said fixed value can be a value chosen regardless of the temperature of the electric motor of the electrospindle, or a value depending on the temperature of the electrospindle electric motor.

With reference to the electrospindle electric motor 2, said electric motor 2 comprises a stator 21 and a rotor 22.

The rotor 22 is arranged inside said stator 21.

With reference to the shaft 3, said shaft 3 is arranged at least partially inside said electric motor 2.

In particular, the shaft 3 is arranged inside the rotor 22 of the electric motor 2.

The shaft 3 is integral with the electric motor 2 (in particular with the rotor 22 of the electric motor 2) so that the rotation of said electric motor 2 causes the rotation of said shaft 3.

The rotation of said shaft 3 causes the rotation of the tool 7 mounted on the electrospindle.

With reference to the first detecting device 4, said first detecting device can be arranged on a portion of the casing 11 of the electrospindle at, or near said electric motor 2.

In the example being described, said first detecting device 4 is a first temperature sensor.

With reference to the first ventilation device F, the air jet generated by said first ventilation device F is directed inside a portion of said casing 1 arranged around the electric motor 2 of the electrospindle.

It is preferable that the electrospindle comprises a duct for joining the first ventilation device F to the electric motor 2 of the electrospindle, so that the air jet generated by said first ventilation device F easily reaches said electric motor.

In particular that said duct has an axis, which coincides with the longitudinal axis A of shaft 3 of the electrospindle.

In the example described, the motor E for rotating the blade B is an electric motor, different from the electric motor of the electrospindle.

Figures 2 and 3 show the second end wall 1B of the electrospindle, wherein the first ventilation device F is positioned, respectively with a protection device S to protect said first ventilation device, and without said protection device S.

In the example described, said protective device S is a casing.

With reference to the storage means 6, said storage means 6 comprise a memory.

In the example described, said storage means are external to said control unit U.

However, said storage means can be arranged inside said control unit, without departing from the scope of the invention.

As mentioned, a first temperature threshold $T_{S1}$ associated with said electric motor 2, and a first velocity value associated with the motor E of the first ventilation device F are stored in said storage means.

When the electrospindle is in use, the control unit U acquires temperature values $T_{Mi}$ associated with the electric motor 2 of the electrospindle (via the first temperature detecting device 4) over time, compares each of said temperature values $T_{Mi}$ with said first temperature threshold $T_{S1}$, and sends a command signal to the motor E of the first ventilation device F, so that the velocity of said motor E is equal to said first velocity value when a temperature value $T_{Mi}$ is greater than said first temperature threshold $T_{S1}$.

In a variant, further data can be stored in said storage means 6.

For example, the following data can be stored in said storage means: a reference ratio $\Delta T_{ref}$ between a predetermined temperature difference $T_{ref2} - T_{ref1}$ and a predetermined time interval $\Delta_t$.

In this case, said control unit U can be configured to:

  ○ calculate in a plurality of predetermined time intervals $\Delta_t$ a respective ratio

$$\Delta T = \frac{T_{fin} - T_{in}}{\Delta_t}$$

to determine how the temperature of said electric motor 2 of said electrospindle varies in each predetermined time interval $\Delta_t$,
  wherein

  $T_{fin}$ is the temperature of said electric motor 2 of said electrospindle measured at the end of said predetermined time interval $\Delta_t$ (through said first temperature detecting device 4),

$T_{in}$ is the temperature of said electric motor 2 of said electrospindle measured at the beginning of said predetermined time interval $\Delta_t$ (through said first temperature detecting device 4),

◦ compare each ratio $\Delta T$ calculated with said reference ratio $\Delta T_{ref}$;
◦ if a ratio calculated $\Delta T$ is greater than said reference ratio $\Delta T_{ref}$, calculate a respective velocity value $v_{M1i}$ of the motor E of said first ventilation device F using the following formula:

$$v_{M1i} = \frac{n_{M1}}{min}$$

wherein

$n_{M1}$ is a number of revolutions of the motor E of said first ventilation device F per minute *min,* wherein

$$n_{M1} = \sqrt[3]{\frac{\Delta T}{a}}$$

and a is a predetermined dimensionless value depending on the thermal characteristics of said electric motor 2 of said electrospindle, wherein said first velocity value is equal to said calculated velocity value $v_{M1i}$, and

◦ send a control signal to said motor E of said first ventilation device F, so that the velocity of said motor E of said first ventilation device F changes over time according to said formula.

The predetermined time interval $\Delta_t$ used in the reference ratio $\Delta T_{ref}$ stored in said storage means 6 is equal to each predetermined time interval, wherein a respective ratio $\Delta T$ is to be calculated.

In other words, whenever the velocity value $v_{M1i}$ is calculated according to the above formula, said value is stored in said storage means 6, so that said first velocity value is equal to said calculated velocity value $v_{M1i}$.

Differently from the case in which said first velocity value is a predetermined velocity value $V_{REF}$, which is a fixed value, said first velocity value is a dynamic value, i.e. a value that changes over time.

The ventilation device F can further comprise detection means for detecting in at least one time instant $t_i$ a respective velocity value $V_{Mi}$ associated with the motor E of the first ventilation device F.

Said control unit U can be configured to acquire each velocity value $V_{Mi}$, associated with the motor E of said first ventilation device F to check whether the blade B rotates.

Furthermore, it is preferable that said control unit U be configured so as not to send any control signal to the motor E of the first ventilation device F if a temperature value $T_{Mi}$ associated with the electric motor 2 of the electrospindle is less than, or equal to said first temperature threshold $T_{S1}$.

In the example described, said electrospindle preferably comprises:

- a bearing 13, and
- a second temperature detecting device 5 for detecting in at least one time instant $t_i$ a respective temperature value $T_{Ci}$ associated with said bearing 13.

The first velocity value associated with the motor E of the ventilation device F and stored in said storage means 6 is a value, which depends on the temperature of said bearing 13.

A second temperature threshold $T_{S2}$ associated with said bearing 13 is stored in said storage means 6.

Furthermore, said control unit U is connected to said second temperature sensing device 5 and configured to:

◦ acquire each temperature value $T_{Ci}$ associated with said bearing 13 through said second temperature detecting device 5,
◦ compare each temperature value $T_{Ci}$ associated with said bearing 13 with said second temperature threshold $T_{S2}$ stored in said storage means 6,
◦ if a temperature value $T_{Ci}$ associated with said bearing 13 is greater than said second temperature threshold $T_{S2}$, calculate a respective velocity value $v_{Ci}$ of the motor E of said first ventilation device F using the following formula:

$$v_{Ci} = \frac{n_{Ci}}{min}$$

wherein

$$n_{Ci} = \sqrt[3]{\frac{T_{Ci}}{b}}$$

is the number of revolutions of the motor E of said first ventilation device F,
b is a predetermined dimensionless value depending on the thermal characteristics of said bearing 13, wherein said first velocity value is equal to said calculated velocity value $v_{Ci}$, and

◦ send a control signal to said motor E of said first ventilation device F, so that the velocity of said motor E of said first ventilation device F is equal to said calculated velocity value $v_{Ci}$.

In other words, whenever the velocity value $v_{Ci}$ is calculated according to the above formula, said value is stored in said storage means 6, so that said first velocity value is equal to calculated said velocity value $v_{Ci}$.

Therefore, even if the electrospindle comprises a bearing 13, said first velocity value is a dynamic value, i.e. a value that changes over time.

In an alternative, in addition to the first velocity value associated with the motor E of the ventilation device F (in which said first velocity value is a value depending on the temperature of said bearing 13) and a second temperature threshold $T_{S2}$ associated with the bearing 13, a second velocity value associated with the electric motor E of the ventilation device F and dependent on the temperature of said electric motor 2 of said electrospindle is stored in said storage means 6.

In said alternative, said control unit U can be connected to said second temperature detecting device 5 and configured to:

○ acquire each temperature value $T_{Ci}$ associated with said bearing 13 through said second temperature detecting device 5,
○ compare each temperature value $T_{Ci}$ associated with said bearing 13 with said second temperature threshold $T_{S2}$ stored in said storage means 6,
○ if a temperature value $T_{Ci}$ associated with said bearing 13 is greater than said second temperature threshold $T_{S2}$, calculate a respective velocity value $v_{Ci}$ of the motor E of said first ventilation device F using the following first formula:

$$v_{Ci} = \frac{n_{Ci}}{min}$$

wherein

$$n_{Ci} = \sqrt[3]{\frac{T_{Ci}}{b}}$$ is the number of revolutions of the motor E of said first ventilation device F, $b$ is a predetermined dimensionless value depending on the thermal characteristics of said bearing 13, wherein said first velocity value is equal to said calculated velocity value $v_{Ci}$,

○ calculate a respective velocity value $v_{Mi}$ of the motor E of said first ventilation device F using the following second formula:

$$v_{M2i} = \frac{n_{M2}}{min}$$

wherein

$n_{M2}$ is a further number of revolutions per minute of the motor E of said first ventilation device F at the

$$n_{M2} = \sqrt[3]{\frac{T_{Mi}}{a}}$$

minute *min,* in which and $a$ is a predetermined dimensionless value depending on the thermal characteristics of said electric motor 2 of said electrospindle, wherein said second velocity value is equal to said calculated velocity value $v_{M2i}$,

○ compare in at least one time instant $t_i$ each velocity value $v_{Ci}$ of the motor E of said first ventilation device F with a respective velocity value $v_{M2i}$ of the motor E of said first ventilation device F to identify a maximum velocity value $v_{max}$ between said velocity value $v_{Ci}$ of the motor E of said first ventilation device F calculated by means of the first formula and said velocity value $v_{M2i}$ of the electric motor 2 of said electrospindle calculated using the second formula, and
○ send a control signal to said motor E of said first ventilation device F, so that the velocity of said motor E of said first ventilation device F is equal to said maximum velocity value $v_{max}$.

In other words, in said alternative, the control unit U identifies the maximum velocity value $v_{max}$ between the velocity value $v_{Ci}$ calculated using the first formula, and the velocity value $v_{M2i}$ calculated using the second formula, and sends a control signal to the motor E of the first ventilation device F, so that the velocity of said motor E of said first ventilation device F is equal to said maximum velocity value $v_{max}$.

With reference to the bearing 13, said bearing 13 is arranged on said first end wall 1A of said casing 11.

With reference to the second detecting device 5, said second sensing device is a second temperature sensor.

Furthermore, said control unit U can be configured not to send any control signal to said motor E of said first ventilation device F when said temperature value $TC_i$ associated with said bearing 13 is less than or equal to said second temperature threshold $T_{S2}$.

A third temperature threshold $T_{S3}$ can be stored in said storage means 6 and said control unit U can be configured to:

○ compare each temperature value $T_{Mi}$ associated with said electric motor 2 of said electrospindle with said third temperature threshold $T_{S3}$,
○ if said temperature value $T_{Mi}$ is greater than said third temperature threshold $T_{S3}$, send an alarm signal and/or a control signal to the motor E of said first ventilation device F, so that the blade B rotates at a velocity that is the maximum velocity associated with said motor E of said first ventilation device F.

Said third temperature threshold $T_{S3}$ is associated with said electric motor 2.

In other words, said third temperature threshold $T_{S3}$ is a further temperature threshold associated with the electric motor 2 with respect to the first temperature threshold $T_{S1}$ mentioned above.

In particular, said third temperature threshold $T_{S3}$ associated with the electric motor 2 is different from said first temperature threshold $T_{S1}$ associated with the electric motor 2.

More specifically, it is preferable that said third temperature threshold $T_{S3}$ is greater than said first temperature threshold $T_{S1}$.

Furthermore, a fourth temperature threshold $T_{S4}$ can be stored in said storage means 6 and said control unit U can be configured to:

　　◦ compare each temperature value $T_{Ci}$ associated with said bearing 13 with said fourth temperature threshold $T_{S4}$,
　　◦ if said temperature value $T_{Ci}$ is greater than said fourth temperature threshold $T_{S4}$, send an alarm signal and/or a control signal to the motor E of said first ventilation device F, so that the blade B rotates at a velocity that is the maximum velocity associated with said motor E of said first ventilation device F.

Said fourth temperature threshold $T_{S4}$ is associated with said bearing 13.

In other words, said fourth temperature threshold $T_{S4}$ is a further temperature threshold associated with the bearing 13 with respect to the second temperature threshold $T_{S2}$ mentioned above.

In particular, said fourth temperature threshold $T_{S4}$ associated with the bearing 13 is different from said second temperature threshold $T_{S2}$ associated with bearing 13.

More particularly, it is preferable that said fourth temperature threshold $T_{S4}$ is greater than said second temperature threshold $T_{S2}$.

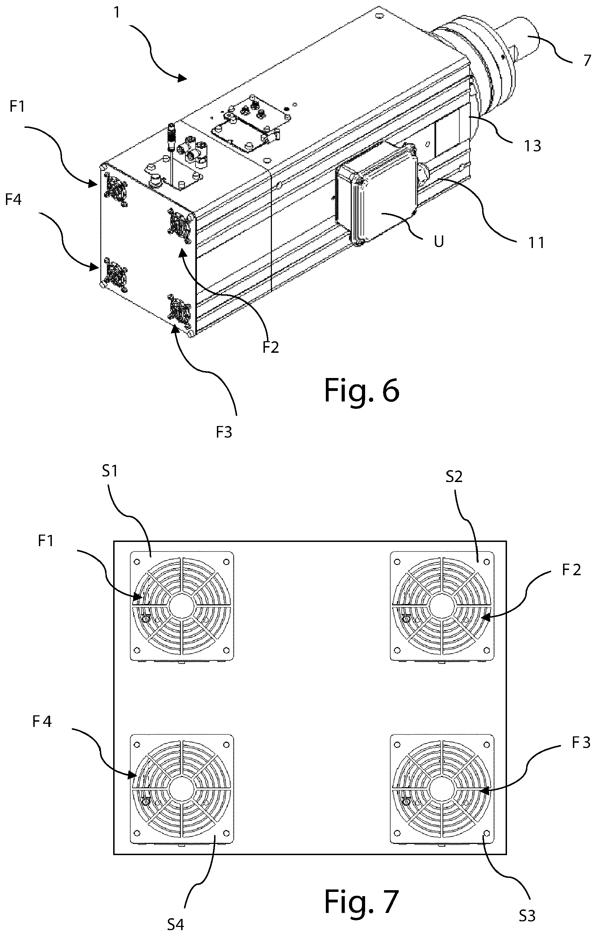

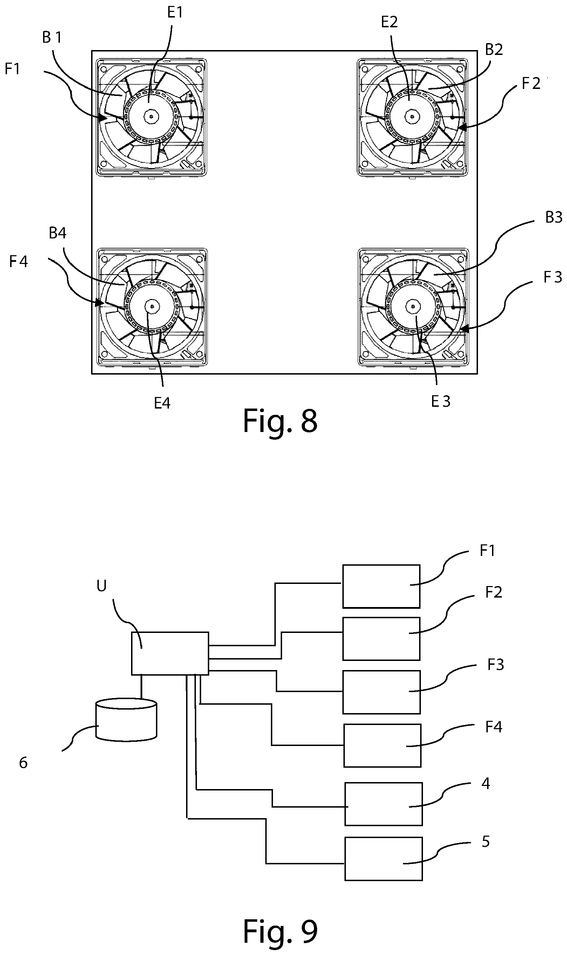

Figures 6 to 9 show a second embodiment of the electrospindle.

In said second embodiment, said electrospindle comprises a plurality of ventilation devices for cooling the electric motor 2 of the electrospindle itself.

In particular, said electrospindle comprises four ventilation devices: a first ventilation device F1, a second ventilation device F2, a third ventilation device F3, and a fourth ventilation device F4.

Each ventilation device F1, F2, F3, F4 respectively comprises at least one blade B1, B2, B3, B4 and a motor E1, E2, E3, E4 for rotating said blade B1, B2, B3, B4.

Each ventilation device F1, F2, F3, F4 is arranged on said second end wall 1B of said casing 1.

The electrospindle comprises a respective protection device S1, S2, S3, S4 to protect each ventilation device F1, F2, F3, F4.

In the example described, each protection device S1, S2, S3, S4 is a respective carter.

Said control unit U is configured to:

　　◦ acquire each temperature value $T_{Mi}$ associated with said electric motor 2 of said electrospindle through said first temperature detecting device 4,
　　◦ compare each temperature value $T_{Mi}$ associated with said electric motor 2 of said electrospindle with said first temperature threshold $T_{S1}$ stored in said storage means 6,
　　◦ if a temperature value $T_{Mi}$ associated with said electric motor 2 of said electrospindle is greater than said first temperature threshold $T_{S1}$,
　　◦ send a respective control signal to the respective motor E1, E2, E3, E4 of each ventilation device F1, F2, F3, F4, so that the velocity value of each motor E1, E2, E3, E4 of each ventilation device F1, F2, F3, F4 is equal to said first velocity value stored in said storage means 6.

In other words, differently from the first embodiment, the control unit U is configured to send a number of command signals equal to the number of ventilation devices so that the velocity value of the respective motor of each ventilation device is equal to said first velocity value.

In said second embodiment, the electrospindle comprises a plurality of ducts (not shown), in particular a respective duct for each ventilation device F1, F2, F3, F4, so that a respective air jet is emitted into a respective duct.

The ducts of said plurality of ducts are arranged inside the casing in such a way that the engine is in a central position with respect to said ducts.

When the ventilation devices F1, F2, F3, F4 are in use, the ducts allow cooling a portion of the casing 1 arranged around the electric motor 2 of the electrospindle.

Each duct of said plurality of ducts has a respective axis, parallel to the longitudinal axis A of the shaft and each ventilation device F1, F2, F3, F4 is arranged along the axis of a respective duct.

In particular, each duct has a first end and a second end.

Each ventilation device can be arranged at said first end of a respective duct, while the second end of each duct is a free end.

Differently from the first embodiment of the electrospindle described above (in which the electrospindle comprises a single ventilation device), in the second embodiment, i.e., when the electrospindle comprises a plurality of ventilation devices, the control unit U is configured to send a respective command signal to each motor E1, E2, E3, E4 of the respective ventilation device F1, F2, F3, F4.

Consequently, the control unit U is configured to send a plurality of command signals according to the number of ventilation devices F1, F2, F3, F4 included in the electrospindle.

Furthermore, the present invention relates to a machining head comprising at least one electrospindle as described above with reference to the first embodiment or the second embodiment.

The present invention also refers to a machine tool for machining parts, comprising:

-　　a base,

- a working table for supporting at least one workpiece, wherein said working table is arranged on said base, and
- a working unit for working said piece, wherein said working unit comprises said at least one working head mentioned above.

**Advantages**

A first advantage of the improved electrospindle object of the invention is given by the possibility of adjusting the velocity of the motor of at least one ventilation device in order to cool the electric motor of the electrospindle according to the temperature associated with said electric motor, in which said temperature is detected by at least one temperature sensor installed on said electrospindle.

A further advantage is given by the possibility of emitting an air jet inside the electrospindle casing, to cool a portion of said casing located inside the electric motor on the basis of the amount of heat to be dissipated, with a level of reduced noise.

The present invention has been described for illustrative but not limitative purposes, according to its preferred embodiments, but it is to be understood that modifications and/or changes can be introduced by those skilled in the art without departing from the relevant scope as defined in the enclosed claims.

**Claims**

1. Electrospindle comprising:

   - a casing (11) comprising a first end wall (1A) and a second end wall (1B), opposite to said first end wall (1A),
   - a shaft (3) having a longitudinal axis (A), arranged at least partially inside said casing (11),
   - an electric motor (2) for rotating said shaft (3) around said longitudinal axis (A), wherein said electric motor is arranged inside said casing (11),
   - a first temperature detecting device (4) for detecting in at least one time instant $t_i$ with i=1...N, where N is a positive integer, a respective temperature value $T_{Mi}$ associated with said electric motor (2),
   - at least one first ventilation device (F) for emitting an air jet, wherein said first ventilation device (F) is arranged on said end wall (1B) in such a way that, when in use, said air jet is directed inside a portion of said casing (11) arranged around said electric motor (2), said first ventilation device (F) comprising at least one blade (B) and a motor (E) for rotating said blade (B),
   - storage means (6) wherein a first temperature threshold $T_{S1}$ associated with said electric motor

   (2) and at least one first velocity value associated with the motor (E) of said first ventilation device (F) are stored,
   - a control unit (U), connected to said first temperature detecting device (4), to said motor (E) of said first ventilation device (F) and to said storage means (6), and configured to:

     ∘ acquire each temperature value $T_{Mi}$ associated with said electric motor (2) of said electrospindle through said first temperature detecting device (4),
     ∘ compare each temperature value $T_{Mi}$ associated with said electric motor (2) of said electrospindle with said first temperature threshold $T_{S1}$ stored in said storage means (6),
     ∘ if a temperature value $T_{Mi}$ associated with said electric motor (2) of said electrospindle is greater than said first temperature threshold $T_{S1}$, send a control signal to said motor (E) of said first ventilation device (F) so that the value of velocity of said motor (E) of said first ventilation device (F) is equal to said first velocity value stored in said storage means (6).

2. Electrospindle according to claim 1, wherein said first velocity value associated with said motor (E) of said first ventilation device (F) is a predetermined velocity value $V_{REF}$.

3. Electrospindle according to claim 1 or 2, wherein said first velocity value associated with said motor (E) of said first ventilation device (F) is a value depending on the temperature of the electric motor (2) of said electrospindle.

4. Electrospindle according to the previous claim, wherein

   the following data are stored in said storage means (6):
   a reference ratio $\Delta T_{ref}$ between a predetermined temperature difference $T_{ref2} - T_{ref1}$ and a predetermined time interval $\Delta_t$,
   wherein
   said control unit (U) is configured to:

     ∘ calculate in a plurality of predetermined time intervals $\Delta_t$ a respective ratio

   $$\Delta T = \frac{T_{fin} - T_{in}}{\Delta_t}$$ to determine how the temperature of said electric motor (2) of said electrospindle varies in each predetermined time interval $\Delta_t$.

where

$T_{fin}$ is the temperature of said electric motor (2) of said electrospindle detected at the end of said predetermined time interval $\Delta_t$,

$T_{in}$ is the temperature of said electric motor (2) of said electrospindle detected at the beginning of said predetermined time interval $\Delta_t$,

∘ compare each calculated ratio $\Delta T$ with said reference ratio $\Delta T_{ref}$;
∘ if a calculated ratio $\Delta T$ is greater than said reference ratio $\Delta T_{ref}$, calculate a respective velocity value $v_{M1i}$ of the motor (E) of said first ventilation device (F) using the following formula:

$$v_{M1i} = \frac{n_{M1}}{min}$$

where
$n_{M1}$ is a number of revolutions of the motor (E) of said first ventilation device (F) per minute *min,* wherein $n_{M1} = \sqrt[3]{\frac{\Delta T}{a}}$ and
*a* is a predetermined adimensional value depending on the thermal characteristics of said electric motor (2) of said electrospindle, said first velocity value being equal to said calculated velocity value $v_{M1i}$, and
∘ send a control signal to said motor (E) of said first ventilation device (F) so that the velocity of said motor (E) of said first ventilation device (F) changes over time according to said formula.

5. Electrospindle according to any one of the previous claims, wherein

said first ventilation device (F) comprises detecting means for detecting in said time instant $t_i$ a respective velocity value $V_{Mi}$ associated with said motor (E) of said first ventilation device (F), and
wherein
said control unit (U) is configured to:

∘ acquire each velocity value $V_{Mi}$ associated with the motor (E) of said first ventilation device (F) to verify if the blade (B) rotates.

6. Electrospindle according to any one of the previous claims, wherein said control unit (U) is configured not to send any control signal to said motor (E) of said first ventilation device (F) if a temperature value $T_{Mi}$ associated with said electric motor (2) of said electrospindle is less than or equal to said first temperature threshold $T_{S1}$.

7. Electrospindle according to claim 1 or 2, wherein

said electrospindle comprises:

- a bearing (13),
- a second temperature detecting device (5) for detecting in at least one time instant $t_i$ a respective temperature value $T_{Ci}$ associated with said bearing (13),

wherein
said first velocity value associated with said motor (E) of said first ventilation device (F) is a value depending on the temperature of said bearing (13),
wherein
a second temperature threshold $T_{S2}$ associated with said bearing (13) is stored in said storage means (6),
wherein
said control unit (U) is connected to said second temperature detecting device (5) is configured to:

∘ acquire each temperature value $T_{Ci}$ associated with said bearing (13) through said second temperature detecting device (5),
∘ compare each temperature value $T_{Ci}$ associated with said bearing (13) with said second temperature threshold $T_{S2}$ stored in said storage means (6),
∘ if a temperature value $T_{Ci}$ associated with said bearing (13) is greater than said second temperature threshold $T_{S2}$, calculate a respective velocity value $v_{Ci}$ of the motor (E) of said first ventilation device (F) through the following formula:

$$v_{Ci} = \frac{n_{Ci}}{min}$$

where
$n_{ci}$ is the number of revolutions of the motor (E) of said first ventilation device (F) per minute *min,* with $n_{Ci} = \sqrt[3]{\frac{T_{Ci}}{b}}$ , wherein
b is a predetermined adimensional value depending on the thermal characteristics of said bearing (13), said first velocity value being equal to said calculated velocity value $v_{Ci}$, and

∘ send a control signal to said motor (E) of said first ventilation device (F) so that the velocity of said motor (E) of said first ventilation device (F) is equal to said calculated velocity value $v_{Ci}$.

8. Electrospindle according to claim 1 or 2, wherein

said electrospindle comprises:

- a bearing (13),
- a second temperature detecting device (5) for detecting in at least one time instant $t_i$ a respective temperature value $T_{Ci}$ associated with said bearing (13),

wherein
said first velocity value associated with said motor (E) of said first ventilation device (F) is a value depending on the temperature of said bearing (13),
wherein
a second velocity value associated with said electric motor (E) of said first ventilation device (F) and depending on the temperature of said electric motor (2) of said electrospindle, as well as a second temperature threshold $T_{S2}$ associated with said bearing (13) are stored in said storage means (6),
wherein
said control unit (U) is connected to said second temperature detecting device (5) and configured to:

∘ acquire each temperature value $T_{Ci}$ associated with said bearing (13) through said second temperature detecting device (5),
∘ compare each temperature value $T_{Ci}$ associated with said bearing (13) with said second temperature threshold $T_{S2}$ stored in said storage means (6),
∘ if a temperature value $T_{Ci}$ associated with said bearing (13) is greater of said second temperature threshold $T_{S2}$, calculate a respective velocity value $v_{Ci}$ of the motor (E) of said first ventilation device (F) through the following first formula:

$$v_{Ci} = \frac{n_{Ci}}{min}$$

where
$n_{ci}$ is the number of revolutions of the motor (E) of said first ventilation device (F) per

$$n_{Ci} = \sqrt[3]{\frac{T_{Ci}}{b}}$$

minute *min,* with , wherein
b is a predetermined adimensional value depending on the thermal characteristics of said bearing (13), said first velocity value being equal to said calculated velocity value $v_{Ci}$,
∘ calculate a respective velocity value $v_{M2i}$ of the motor (E) of said first ventilation device (F) through the following second formula:

$$v_{M2i} = \frac{n_{M2}}{min}$$

where
$n_{M2}$ is a further number of revolutions of the motor (E) of said first ventilation device (F)

$$n_{M2} = \sqrt[3]{\frac{T_{Mi}}{a}}$$

per minute *min,* wherein
and *a* is a predetermined adimensional value depending on the thermal characteristics of said electric motor (2) of said electrospindle, said second velocity value being equal to said calculated velocity value $v_{M2i}$,
∘ compare in at least one time instant $t_i$ each velocity value $v_{Ci}$ of the motor (E) of said first ventilation device (F) calculated through the first formula with a respective velocity value $v_{M2i}$ of the motor (E) of said first ventilation device (F) calculated through the second formula to identify a maximum velocity value $v_{max}$ between said velocity value $v_{Ci}$ of the motor (E) of said first ventilation device (F) calculated through the first formula and said velocity value $v_{M2i}$ of the motor (E) of said first ventilation device (F) calculated through the second formula, and
∘ send a control signal to said motor (E) of said first ventilation device (F) so that the velocity of said motor (E) of said first ventilation device (F) is equal to said maximum velocity value $v_{max}$.

9. Electrospindle according to claim 7 or 8, wherein said control unit (U) is configured not to send any control signal to said motor (E) of said first ventilation device (F) when said temperature value $TC_i$ associated with said bearing (13) is less than or equal to said second temperature threshold $T_{S2}$.

10. Electrospindle according to any one of the previous claims, wherein

a third temperature threshold $T_{S3}$ is stored in said storage means (6),
wherein
said control unit (U) is configured to:

  ∘ compare each temperature value $T_{Mi}$ associated with said electric motor (2) of said electrospindle with said third temperature threshold $T_{S3}$,
  ∘ if said temperature value $T_{Mi}$ is greater than said third temperature threshold $T_{S3}$, sand an alarm signal and/or a control signal to said motor (E) of said first ventilation device (F) so that the blade (B) rotates at a velocity, which is the maximum velocity associated with said motor (E) of said first ventilation device (F).

11. Electrospindle according to any one of the previous claims 7-10, wherein

a fourth temperature threshold $T_{S4}$ is stored in said storage means (6),
wherein
said control unit (U) is configured to:

  ∘ compare each temperature value $T_{Ci}$ associated with said bearing (13) with said fourth temperature threshold $T_{S4}$,
  ∘ if said temperature value $T_{Ci}$ is greater than said fourth temperature threshold $T_{S4}$, send an alarm signal and/or a control signal to the motor (E) of said first ventilation device (F) so that the blade (B) rotates at a velocity, which is the maximum velocity associated with said motor (E) of said first ventilation device (F).

12. Working head comprising at least one electrospindle according to any one of the claims 1-11.

13. Machine tool for working pieces, comprising:

- a basement,
- a working table for supporting at least one piece, wherein said working table is arranged on said basement, and
- a working unit for working said piece, wherein said working unit comprising at least one working head according to the previous claim.

**Fig. 1**

**Fig. 2**

**Fig. 3**

Fig. 4

Fig. 5

1

F1

F4

F2

F3

7

13

11

U

## Fig. 6

S1

S2

F1

F2

F4

F3

S4

## Fig. 7

S3

Fig. 8

Fig. 9

Europäisches
Patentamt

European
Patent Office

Office européen
des brevets

# EUROPEAN SEARCH REPORT

**Application Number**

EP 23 15 9951

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 305 311 A (WOLONG ELECTRIC DRIVING GROUP CO LTD ET AL.) 27 August 2021 (2021-08-27) | 1-3,5,6, 10-13 | INV. G05B19/406 B23Q11/12 G05B19/404 |
| A | * paragraph [0034] – paragraph [0039] * * figures 1, 2 * | 4,7-9 | |
| A | US 2019/329370 A1 (NAITO GENZO [JP] ET AL) 31 October 2019 (2019-10-31) * the whole document * | 1-13 | |
| A | JP H07 237085 A (ROKUROKU SANGYO KK) 12 September 1995 (1995-09-12) * the whole document * | 1-13 | |
| A | US 2016/351041 A1 (OKUAKI KENICHI [JP] ET AL) 1 December 2016 (2016-12-01) * the whole document * | 1-13 | |
| A | US 5 594 603 A (MORI KAZUNORI [JP] ET AL) 14 January 1997 (1997-01-14) * the whole document * | 1-13 | |
| A | US 2005/207899 A1 (FURUTA HIDETO [JP]) 22 September 2005 (2005-09-22) * the whole document * | 1-13 | TECHNICAL FIELDS SEARCHED (IPC) G05B B23Q |
| A | US 6 078 115 A (UCHIDA HIROYUKI [JP] ET AL) 20 June 2000 (2000-06-20) * the whole document * | 1-13 | |

The present search report has been drawn up for all claims

| Place of search | Date of completion of the search | Examiner |
|---|---|---|
| The Hague | 12 May 2023 | Falconi, Riccardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 9951

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2023

| Patent document cited in search report | | Publication date | Patent family member(s) | | Publication date |
|---|---|---|---|---|---|
| CN 113305311 | A | 27-08-2021 | NONE | | |
| US 2019329370 | A1 | 31-10-2019 | CN | 110417321 A | 05-11-2019 |
| | | | DE | 102019002984 A1 | 31-10-2019 |
| | | | JP | 6705863 B2 | 03-06-2020 |
| | | | JP | 2019188578 A | 31-10-2019 |
| | | | US | 2019329370 A1 | 31-10-2019 |
| JP H07237085 | A | 12-09-1995 | NONE | | |
| US 2016351041 | A1 | 01-12-2016 | CN | 106211706 A | 07-12-2016 |
| | | | DE | 102016109611 A1 | 08-12-2016 |
| | | | JP | 6174626 B2 | 02-08-2017 |
| | | | JP | 2016225500 A | 28-12-2016 |
| | | | US | 2016351041 A1 | 01-12-2016 |
| US 5594603 | A | 14-01-1997 | JP | 2902921 B2 | 07-06-1999 |
| | | | JP | H07153208 A | 16-06-1995 |
| | | | US | 5594603 A | 14-01-1997 |
| US 2005207899 | A1 | 22-09-2005 | CN | 1701167 A | 23-11-2005 |
| | | | CN | 101201066 A | 18-06-2008 |
| | | | EP | 1653063 A1 | 03-05-2006 |
| | | | JP | 4206008 B2 | 07-01-2009 |
| | | | JP | 2005061277 A | 10-03-2005 |
| | | | KR | 20050094344 A | 27-09-2005 |
| | | | US | 2005207899 A1 | 22-09-2005 |
| | | | WO | 2005014987 A1 | 17-02-2005 |
| US 6078115 | A | 20-06-2000 | DE | 69735801 T2 | 26-10-2006 |
| | | | EP | 0878896 A1 | 18-11-1998 |
| | | | JP | 2966799 B2 | 25-10-1999 |
| | | | JP | H10146021 A | 29-05-1998 |
| | | | US | 6078115 A | 20-06-2000 |
| | | | WO | 9820601 A1 | 14-05-1998 |

EPO FORM P0459

For more details about this annex : see Official Journal of the European Patent Office, No. 12/82